# EUROPEAN PATENT SPECIFICATION

(11) **EP 3 682 960 B1**
(45) Date of publication and mention of the grant of the patent: **31.08.2022**
(21) Application number: 19197678.6
(22) Date of filing: 17.09.2019
(51) Int. Cl.: B01D 35/30, C02F 1/00

(54) **WATER PURIFIER STRUCTURE**
WASSERREINIGERVORRICHTUNG
STRUCTURE DE PURIFICATEUR D'EAU

(30) Priority: 17.01.2019 TW 108200850 U
(43) Date of publication of application: 22.07.2020
(73) Proprietor: Kemflo International, Co., Ltd., Pingtung City (TW)
(72) Inventor: LIN, Ching-Hsiung, Pingtung City (TW); LIN, Sheng-Nan, Pingtung City (TW)
(74) Representative: Patentanwälte Hosenthien-Held und Dr. Held

(56) References cited:
- WO-A1-2018/121090
- GB-A- 2 504 501
- US-A- 3 923 663
- US-B2- 7 033 502

## Description

The present invention relates to a purifier and, more particularly, to a water purifier structure.

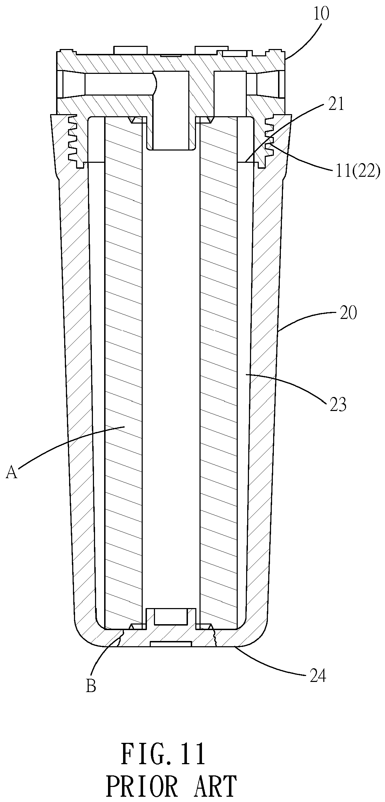

A conventional water purifier structure in accordance with the prior art shown in FIG. 11 comprises a container 20 having an interior provided with a receiving chamber 23 and having a top provided with an opening 21, a top cap 10 mounted on the opening 21 of the container 20, and a filtering element A mounted in the receiving chamber 23 of the container 20. The container 20 has a bottom 24 having a flat face. The top of the container 20 has an internal thread 22, and the top cap 10 has an external thread 11 screwed into the internal thread 22 of the container 20. Thus, the filtering element A is located between the top cap 10 and the bottom 24 of the container 20. However, when the filtering element A has a greater length, the top cap 10 and the bottom 24 of the container 20 are pressed by the filtering element A, such that the bottom 24 of the container 20 easily produces a crack B, thereby wearing and decreasing the lifetime of the container 20. Relevant prior art documents are US 7 033 502 B2, GB 2 504 501 A, WO 2018/121090 A1, US 3 923 663 A.

The primary objective of the present invention is to provide a water purifier structure having a buffering effect to receive filter elements with different length.

A water purifier apparatus is provided in independent apparatus claim 1 which comprises the essential features of the invention. Further, preferred embodiments are described in dependent claims 2-10.

In accordance with the present invention, there is provided a water purifier structure comprising a container assembly and a buffer unit mounted in the container assembly. The container assembly includes a housing and a cap unit mounted on the housing. The housing has a first connecting portion. The housing has an interior provided with a first receiving section. The housing has a top provided with an opening. The housing has a bottom provided with a second receiving section. The bottom of the housing has an arcuate recessed shape. The second receiving section of the housing is provided with a retaining portion. The cap unit has a second connecting portion detachably connected with the first connecting portion of the housing. The buffer unit is mounted in the second receiving section of the housing. The buffer unit includes a positioning ring secured in the retaining portion of the housing, and a cushioning member elastically mounted in the positioning ring. The cushioning member is elastically movable in the positioning ring upward and downward. When the cushioning member is compressed by an external force, the cushioning member is contracted and elastically deformed toward the second receiving section of the housing, to form a buffering force.

Further benefits and advantages of the present invention will become apparent after a careful reading of the detailed description with appropriate reference to the accompanying drawings.

In the drawings:
FIG. 1 is an exploded perspective view of a water purifier structure in accordance with the preferred embodiment of the present invention.
FIG. 2 is an exploded perspective view of a cap unit of the water purifier structure in accordance with the preferred embodiment of the present invention.
FIG. 3 is a perspective view of a housing of the water purifier structure in accordance with the preferred embodiment of the present invention.
FIG. 4 is a perspective view of the water purifier structure in accordance with the preferred embodiment of the present invention.
FIG. 5 is a cross-sectional view and a locally enlarged view of the water purifier structure in accordance with the preferred embodiment of the present invention.
FIG. 6 is a partial cross-sectional operational view of the water purifier structure in accordance with the preferred embodiment of the present invention.
FIG. 7 is another partial cross-sectional operational view of the water purifier structure in accordance with the preferred embodiment of the present invention.
FIG. 8 is a partial cross-sectional view of a water purifier structure in accordance with another preferred embodiment of the present invention.
FIG. 9 is an exploded perspective view of a water purifier structure in accordance with a further preferred embodiment of the present invention.
FIG. 10 is a partial cross-sectional assembly view of the water purifier structure as shown in FIG. 9.
FIG. 11 is a cross-sectional view of a conventional water purifier structure in accordance with the prior art.

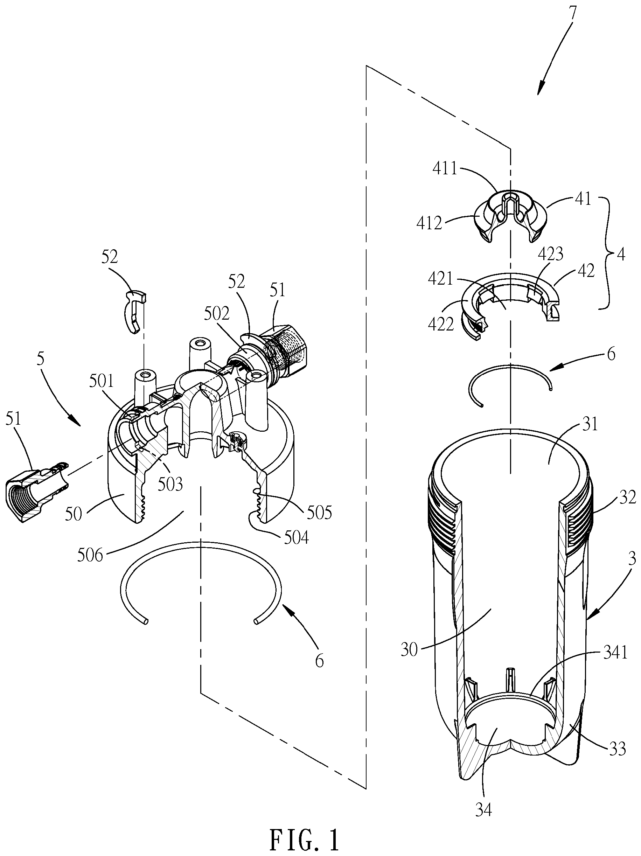

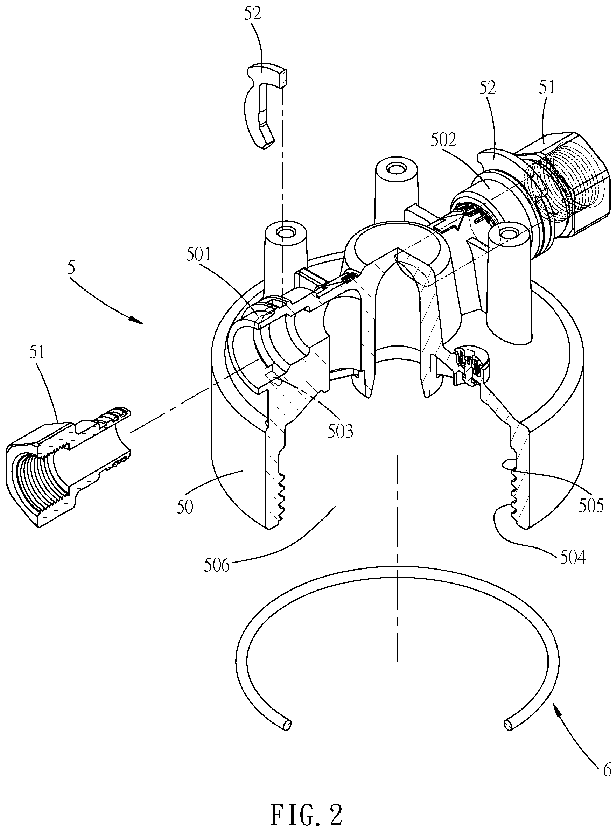

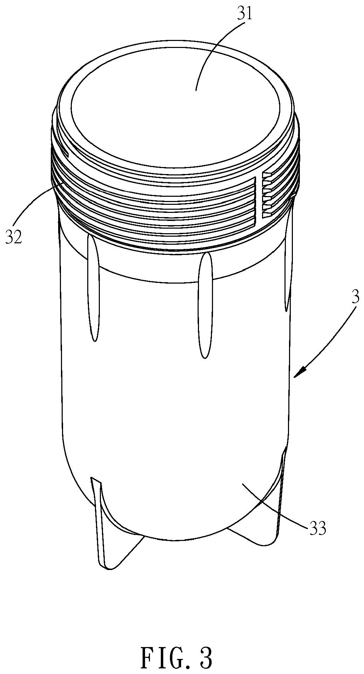

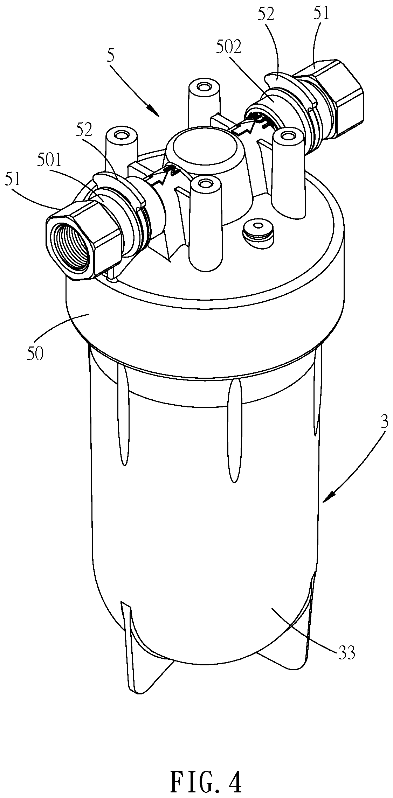

Referring to the drawings and initially to FIGS. 1-7, a water purifier structure in accordance with the preferred embodiment of the present invention comprises a container assembly 7 and a buffer (or cushion) unit 4 mounted in the container assembly 7.

The container assembly 7 includes a housing 3 and a cap unit 5 mounted on the housing 3.

The housing 3 has a first connecting portion 32. The housing 3 has an interior provided with a first receiving section 30 for mounting a filter element (or filter or filter cartridge) A. The housing 3 has a top provided with an opening 31 connected to the first receiving section 30. The housing 3 has a bottom 33 provided with a second receiving section 34 connected to the first receiving section 30. The bottom 33 of the housing 3 has an arcuate recessed shape. The second receiving section 34 of the housing 3 is provided with a retaining (or securing or fastening or locking) portion 342.

The cap unit 5 has a second connecting portion 504 detachably connected with the first connecting portion 32 of the housing 3. The cap unit 5 includes a cover 50, two quick connectors 51, and two buckles (or fasteners or latches) 52 each having an inverted U-shape profile. The cover 50 has an interior provided with a chamber 506 which has a periphery provided with an annular groove 505. The chamber 506 has an inverted U-shape profile. The second connecting portion 504 is formed in the chamber 506 of the cover 50. The cover 50 has a top provided with a water inlet port 501 and a water outlet port 502 each having a snap-fit hole 503.

The buffer unit 4 is mounted in the second receiving section 34 of the housing 3. The buffer unit 4 includes a positioning ring 42 secured in the retaining portion 342 of the housing 3, and a cushioning (or pressing or buffering) member 41 elastically mounted in the positioning ring 42. The cushioning member 41 is made of elastic material and is elastically movable in the positioning ring 42 upward and downward. Thus, when the cushioning member 41 is compressed by an external force, the cushioning member 41 is contracted and elastically deformed toward the second receiving section 34 of the housing 3, to form a buffering (or cushioning) force.

According to the present invention, the cushioning member 41 and the positioning ring 42 of the buffer unit 4 are connected detachably. The cushioning member 41 has an upper end provided with a push portion 411 and a lower end provided with a pressing portion 412. The push portion 411 of the cushioning member 41 is provided with a central cavity having an annular shape. The pressing portion 412 of the cushioning member 41 has a conical (or tapered) shape. The positioning ring 42 has an interior provided with a hollow passage 421. The positioning ring 42 has an annular inner face provided with a plurality of elastic plates 423 and has an outer face provided with a snap-fit portion 422 secured on the retaining portion 342 of the housing 3. The snap-fit portion 422 of the positioning ring 42 has a substantially U-shaped cross-sectional profile. The pressing portion 412 of the cushioning member 41 is received in the hollow passage 421 of the positioning ring 42 and is elastically pressed by the elastic plates 423 of the positioning ring 42. The push portion 411 of the cushioning member 41 protrudes outward from a top of the positioning ring 42. Thus, the cushioning member 41 is movable in the hollow passage 421 of the positioning ring 42 and is deformed and flexed elastically due to a compressing force.

In the preferred embodiment of the present invention, the retaining portion 342 of the housing 3 is a groove allowing insertion of the positioning ring 42.

In the preferred embodiment of the present invention, the first connecting portion 32 of the housing 3 is an external thread, and the second connecting portion 504 of the cap unit 5 is an internal thread screwed onto the first connecting portion 32 of the housing 3.

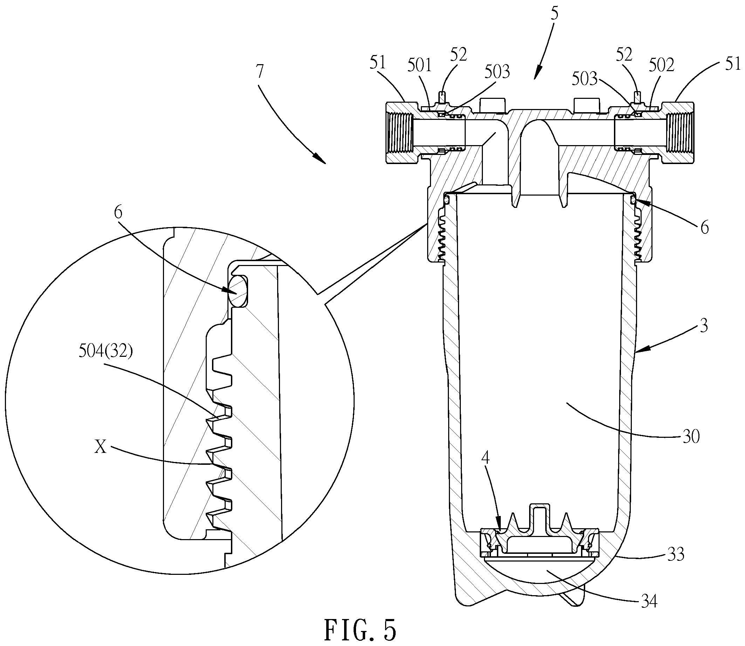

As shown in FIG. 5, each of the first connecting portion 32 of the housing 3 and the second connecting portion 504 of the cap unit 5 has a discontinuous double threading X. When the second connecting portion 504 of the cap unit 5 is screwed onto the first connecting portion 32 of the housing 3, the double threading X is kept at a line-to-line contact, such that the first connecting portion 32 of the housing 3 and the second connecting portion 504 of the cap unit 5 are subjected to a force evenly, to enhance a screwing strength, and to prevent the double threading X from being loosened. Preferably, the double threading X has a root portion that is deformed to enhance engagement of the double threading X.

In assembly, one of two O-rings 6 is mounted in the annular groove 505 of the cover 50 to provide an air-tight effect. Then, the other one of two O-rings 6 is mounted in the snap-fit portion 422 of the positioning ring 42. Then, the buffer unit 4 is mounted in the second receiving section 34 of the housing 3 of the container assembly 7, and the positioning ring 42 of the buffer unit 4 is secured in the retaining portion 342 of the housing 3. At this time, the other one of two O-rings 6 is located between the snap-fit portion 422 of the positioning ring 42 and the retaining portion 342 of the housing 3. Then, the two quick connectors 51 are respectively connected with the water inlet port 501 and the water outlet port 502 of the cover 50. Then, the two buckles 52 are snapped into and locked in the snap-fit hole 503 to lock the two quick connectors 51 respectively. Then, the second connecting portion 504 of the cap unit 5 is screwed onto the first connecting portion 32 of the housing 3, such that the cap unit 5 is mounted on the housing 3. Thus, assembly of the water purifier structure is finished.

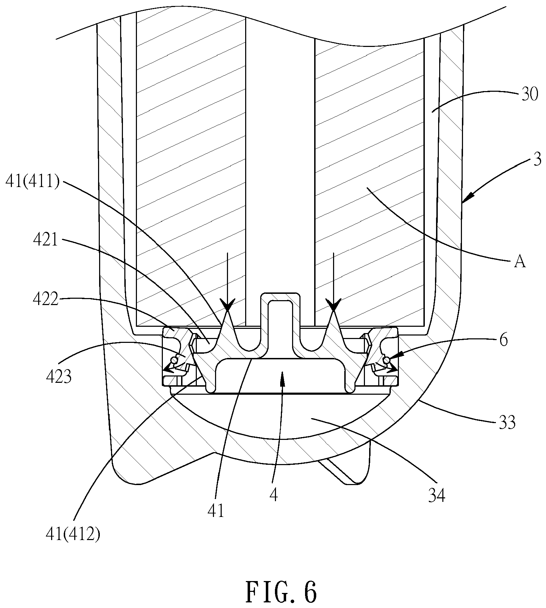

Referring to FIG. 6 with reference to FIGS. 1-5, when the cap unit 5 is removed from the housing 3, the filter element A is inserted through the opening 31 into the first receiving section 30 of the housing 3. Then, the cap unit 5 is mounted on the housing 3 again, such that the filter element A is located between the cap unit 5 and the housing 3. At this time, the bottom of the filter element A rests on the push portion 411 of the cushioning member 41 of the buffer unit 4.

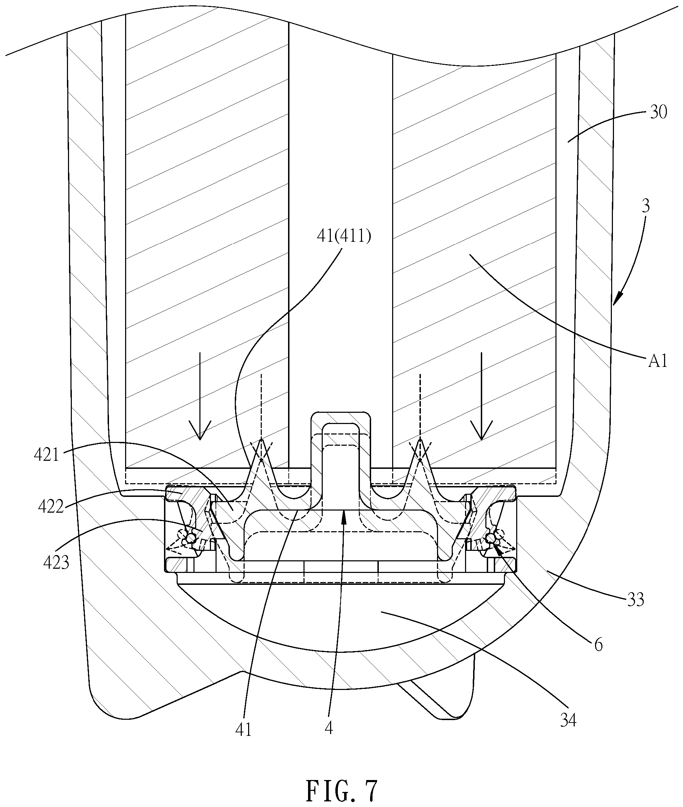

Referring to FIG. 7, when the filter element A has a greater length, the push portion 411 of the cushioning member 41 is pressed by the filter element A. At this time, the positioning ring 42 of the buffer unit 4 is limited by the retaining portion 342 of the housing 3, such that when the push portion 411 of the cushioning member 41 is compressed, the cushioning member 41 of the buffer unit 4 is moved downward relative to the positioning ring 42, and the pressing portion 412 of the cushioning member 41 is moved to press and contract the elastic plates 423 of the positioning ring 42. In such a manner, when the cushioning member 41 is pressed by the filter element A, the cushioning member 41 is contracted and elastically deformed toward the second receiving section 34 of the housing 3, to form a buffering force, such that the filter element A will not directly press the bottom 33 of the housing 3, thereby preventing the bottom 33 of the housing 3 from producing a crack.

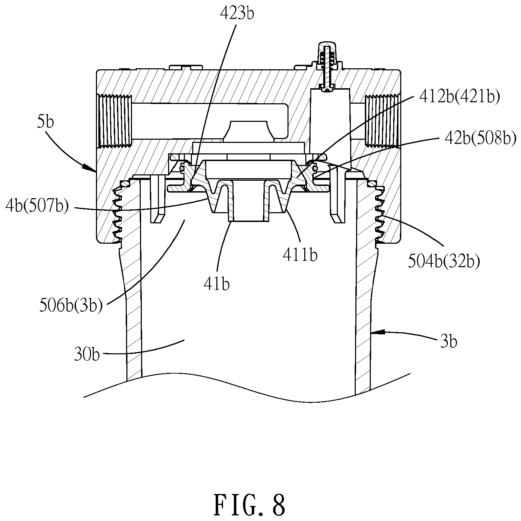

Referring to FIG. 8, the chamber 506b of the cap unit 5b is provided with a third receiving section 507b connected to the first receiving section 30b. The third receiving section 507b of the cap unit 5b is provided with a retaining (or securing or fastening or locking) portion 508b. The buffer unit 4b is inserted into the third receiving section 507b of the cap unit 5b. The second connecting portion 504b of the cap unit 5b is screwed onto the first connecting portion 32b of the housing 3b, such that the cap unit 5b is mounted on the housing 3b. In use, when the filter element has a greater length, the push portion 411b of the buffer unit 4b is pressed by the filter element. At this time, the positioning ring 42b of the buffer unit 4b is limited by the retaining portion 508b of the third receiving section 507b of the cap unit 5b, such that when the push portion 411b of the buffer unit 4b is compressed, the cushioning member 41b of the buffer unit 4b is moved relative to the positioning ring 42b, and the pressing portion 412b of the cushioning member 41b is moved in the hollow passage 421b of the positioning ring 42b to press and contract the elastic plates 423b of the positioning ring 42b. In such a manner, when the buffer unit 4b is pressed by the filter element, the buffer unit 4b is contracted and elastically deformed, to form a buffering force.

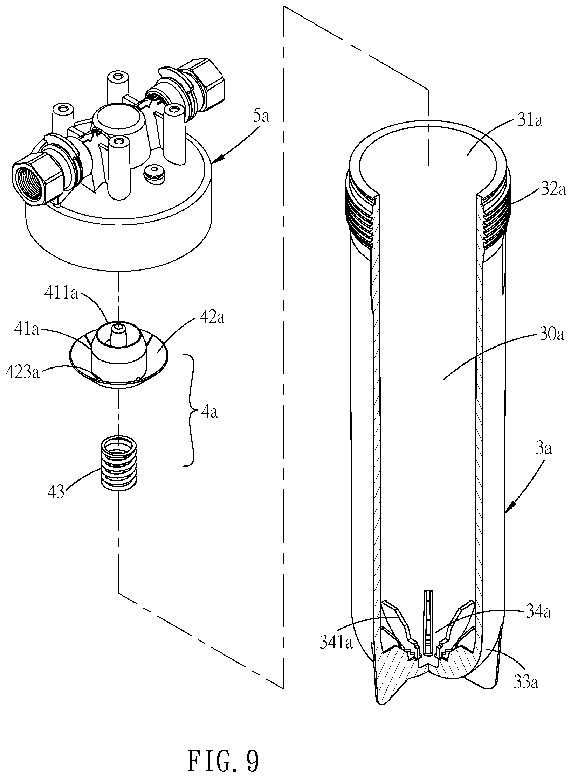

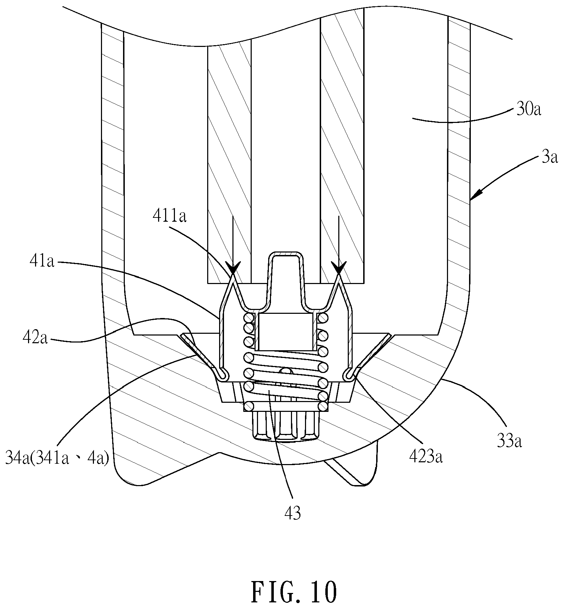

Referring to FIGS. 9 and 10, the housing 3a has an interior provided with a first receiving section 30a and has a top provided with an opening 31a connected to the first receiving section 30a. The housing 3a has a bottom 33a provided with a second receiving section 34a connected to the first receiving section 30a. The second receiving section 34a of the housing 3a is provided with a retaining (or securing or fastening or locking) portion 342a. The retaining portion 342a of the housing 3a includes a plurality of conical ribs arranged longitudinally and annularly. The cap unit 5a is mounted on the first connecting portion 32a of the housing 3a. The cushioning member 41a and the positioning ring 42a of the buffer unit 4a are formed integrally. The cushioning member 41a has an upper end provided with a push portion 411a. The positioning ring 42a has a conical shape and extends outward from a bottom of the cushioning member 41a. The cushioning member 41a and the positioning ring 42a have a connection formed with a plurality of elastic plates 423a. The buffer unit 4a further includes an elastic member 43 mounted in the second receiving section 34a of the housing 3a and biased between a bottom of the second receiving section 34a and the cushioning member 41a. In such a manner, the elastic plates 423a provide an elastic force so that when the buffer unit 4a is compressed, the cushioning member 41a is contracted and elastically deformed toward the second receiving section 34a of the housing 3a, to form a buffering force. In addition, the elastic member 43 provides a restoring force to the buffer unit 4a.

Accordingly, when the buffer unit is pressed by the filter element, the buffer unit is contracted and elastically deformed to form a buffering force to the filter element, such that the filter element will not directly press the bottom of the housing, thereby preventing the bottom of the housing from producing a crack, so as to enhance the lifetime of the housing. In addition, the housing is used to receive filter elements with different length. Further, the two buckles 52 are snapped into and locked in the snap-fit hole 503 to lock the two quick connectors 51 respectively, such that the two quick connectors 51 are connected with the cover 50 quickly.

Although the invention has been explained in relation to its preferred embodiment(s) as mentioned above, it is to be understood that many other possible modifications and variations can be made, as long as they fall within the scope of the appended claims.

## Claims

1. A water purifier structure comprising:
a container assembly (7); and
a buffer unit (4) mounted in the container assembly (7);
wherein:
the container assembly (7) includes a housing (3) and a cap unit (5) mounted on the housing (3);
the housing (3) has a first connecting portion (32);
the housing (3) has an interior provided with a first receiving section (30);
a filter element (A) is mounted in the first receiving section (30) of the housing (3);
the housing (3) has a top provided with an opening (31);
the housing (3) has a bottom provided with a second receiving section (34) connected to the first receiving section (30);
the bottom of the housing (3) has an arcuate recessed shape;
the second receiving section (34) of the housing (3) is provided with a retaining portion (342);
the cap unit (5) has a second connecting portion (504) detachably 20connected with the first connecting portion (32) of the housing (3);
the cap unit (5) has a water inlet port (501) connected to the first receiving section (30) and a water outlet port (502) connected to the first receiving section (30);
the buffer unit (4) is mounted in the second receiving section (34) of the housing (3);
the buffer unit (4) includes a positioning ring (42) secured in the retaining portion (342) of the housing (3), and a cushioning member (41) elastically mounted in the positioning ring (42);
the filter element (A) is located between the cap unit (5) and the buffer unit (4);
the filter element (A) has a bottom pressing the cushioning member (41) of the buffer unit (4);
the cushioning member (41) is elastically movable in the positioning ring (42) upward and downward;
when the cushioning member (41) is compressed by an external force, the cushioning member (41) is contracted and elastically deformed toward the second receiving section (34) of the housing (3), to form a buffering force;
the cushioning member (41) and the positioning ring (42) of the buffer unit (4) are connected detachably;
the cushioning member (41) has an upper end provided with a push portion (411) and a lower end provided with a pressing portion (412);
the bottom of the filter element (A) presses the push portion (411) of the cushioning member (41);
the push portion of the cushioning member (41) is provided with a central cavity having an annular shape;
the pressing portion of the cushioning member (41) has a conical shape;
the positioning ring has an interior provided with a hollow passage (421);
the positioning ring has an annular inner face provided with a plurality of elastic plates (423) and has an outer face provided with a snap-fit portion (422) secured on the retaining portion of the housing (3);
the pressing portion of the cushioning member (41) is received in the hollow passage of the positioning ring (42) and is elastically pressed by the elastic plates (423) of the positioning ring (42); and
the push portion of the cushioning member (41) protrudes outward from a top of the positioning ring (42).

2. The water purifier structure of claim 1, wherein the cap unit (5) comprises a chamber (506b), which chamber (5) provided with a third receiving section (507b) connected to the first receiving section (30b), the third receiving section of the cap unit (5b) is provided with a retaining portion (508b), and the buffer unit (4b) is inserted into the third receiving section of the capunit (5).

3. The water purifier structure of claim 1, wherein:
the cushioning member (41) and the positioning ring (42) of the buffer unit are formed integrally;
the cushioning member (41) has an upper end provided with a push portion (411a);
the positioning ring (42) has a conical shape and extends outward from a bottom of the cushioning member (41);
the cushioning member (41) and the positioning ring (42) have a connection formed with a plurality of elastic plates (423a); and
the buffer unit (4) further includes an elastic member (43) mounted in the second receiving section (34) of the housing (3) and biased between a bottom of the second receiving section (34) and the cushioning member (41).

4. The water purifier structure of claim 1, wherein the retaining portion (342) of the housing (3) is a groove allowing insertion of the positioning ring (42).

5. The water purifier structure of claim 4, wherein the retaining portion of the housing (3) includes a plurality of conical ribs arranged longitudinally and annularly.

6. The water purifier structure of claim 1, wherein:
each of the first connecting portion of the housing (3) and the second connecting portion (504) of the cap unit (5) has a discontinuous double threading (X); and
when the second connecting portion (34) of the cap unit (5) is screwed onto the first connecting portion of the housing (3),
the double threading is kept at a line-to-line contact, such that the first connecting portion (32) of the housing (3) and the second connecting portion (504) of the cap unit (5) are subjected to a force evenly, to enhance a screwing strength, and to prevent the double threading from being loosened.

7. The water purifier structure of claim 6 , wherein the double threading has a root portion that is deformed.

8. The water purifier structure of claim 1, wherein the cap unit includes a cover (50) provided with the water inlet port (501) and the water outlet port (502), two quick connectors (51) connected with the water inlet port and the water outlet port of the cover, and two buckles (52) connecting the two quick connectors with the cover, and the two quick connectors (51) are locked onto and unlocked from the cover by the two buckles (52).

9. The water purifier structure of claim 1, wherein the second receiving section (34) extends downward in the bottom of the housing (3) to provide a space for receiving the buffer unit (4).

10. The water purifier structure of claim 1, wherein the first connecting portion (32) of the housing (3) is an external thread, and the second connecting portion (502) of the cap unit (5) is an internal thread screwed onto the first connecting portion (32) of the housing (3).

## Patentansprüche

1. Wasserreinigungsvorrichtung, aufweisend:
eine Behälteranordnung (7); und
eine Dämpfungseinheit (4), die in der Behälteranordnung (7) angebracht ist;
wobei:
die Behälteranordnung (7) ein Gehäuse (3) und eine Kappeneinheit (5), die an dem Gehäuse (3) angebracht ist, aufweist;
das Gehäuse (3) einen ersten Verbindungsabschnitt (32) hat;
das Gehäuse (3) einen Innenraum hat, der mit einem ersten Aufnahmeabschnitt (30) versehen ist;
ein Filterelement (A) an dem ersten Aufnahmeabschnitt (30) des Gehäuses (3) angebracht ist;
das Gehäuse (3) eine Oberseite hat, die mit einer Öffnung (31) versehen ist;
das Gehäuse (3) einen Boden hat, der mit einem zweiten Aufnahmeabschnitt (34) versehen ist,
welcher mit dem ersten Aufnahmeabschnitt (30) verbunden ist;
der Boden des Gehäuses (3) eine bogenförmige vertiefte Gestalt hat;
der zweite Aufnahmeabschnitt (34) des Gehäuses (3) mit einem Halteabschnitt (342) versehen ist;
die Kappeneinheit (5) einen zweiten Verbindungsabschnitt (504) aufweist, der lösbar mit dem ersten Verbindungsabschnitt (32) des Gehäuses (3) verbunden ist;
die Kappeneinheit (5) eine mit dem ersten Aufnahmeabschnitt (30) verbundene Wassereinlassöffnung (501) und eine mit dem ersten Aufnahmeabschnitt (30) verbundene Wasserauslassöffnung (502) aufweist;
die Dämpfungseinheit (4) an dem zweiten Aufnahmeabschnitt (34) des Gehäuses (3) angebracht ist;
die Dämpfungseinheit (4) einen Positionierungsring (42), der in dem Halteabschnitt (342) des Gehäuses (3) befestigt ist, und ein Dämpfungselement (41) aufweist, das elastisch in dem Positionierungsring (42) montiert ist;
das Filterelement (A) zwischen der Kappeneinheit (5) und der Dämpfungseinheit (4) angeordnet ist;
das Filterelement (A) einen Boden hat, der auf das Dämpfungselement (41) der Dämpfungseinheit (4) drückt;
das Dämpfungselement (41) in dem Positionierungsring (42) elastisch nach oben und unten bewegbar ist;
wenn das Dämpfungselement (41) durch eine externe Kraft zusammengedrückt wird, das Dämpfungselement (41) zusammengezogen und elastisch in Richtung des zweiten Aufnahmeabschnitts (34) des Gehäuses (3) verformt wird, um eine Dämpfungskraft auszubilden;
das Dämpfungselement (41) und der Positionierungsring (42) der Dämpfungseinheit (4) lösbar verbunden sind;
das Dämpfungselement (41) ein oberes Ende, das mit einem Schubabschnitt (411) versehen ist, und
ein unteres Ende hat, das mit einem Drückabschnitt (412) versehen ist;
der Boden des Filterelements (A) den Schubabschnitt (411) des Dämpfungselements (41) drückt;
der Schubabschnitt des Dämpfungselements (41) ausgestattet ist mit einem zentralen Hohlraum von ringförmiger Gestalt;
der Drückbereich des Dämpfungselements (41) eine konische Gestalt hat;
der Positionierungsring ein Inneres hat, das mit einem hohlen Durchlass (421) ausgestattet ist;
der Positionierungsring eine ringförmige Innenfläche, die mit einer Mehrzahl elastischer Platten (423) ausgestattet ist, und eine Außenfläche hat; die mit einem Schnappsitzabschnitt (422) versehen ist, der an dem Halteabschnitt des Gehäuses (3) gesichert ist;
der Drückbereich des Dämpfungselements (41) in dem hohlen Durchlass des Positionierungsrings (42) aufgenommen ist und elastisch durch die elastischen Platten (423) des Positionierungsrings (42) gedrückt wird;
der Schubbereich des Dämpfungselements (41) nach außen von einer Oberseite des Positionierungsrings (42) vorsteht.

2. Wasserreinigungsvorrichtung nach Anspruch 1, wobei die Kappeneinheit (5) eine Kammer (506b) aufweist, die Kammer mit einem dritten Aufnahmeabschnitt (507b) versehen ist, der mit dem ersten Aufnahmeabschnitt (30b) verbunden ist und mit einem Halteabschnitt (508b) versehen ist, und die Dämpfungseinheit (4b) in den dritten Aufnahmeabschnitt der Kappeneinheit (5) eingesetzt ist.

3. Wasserreinigungsvorrichtung nach Anspruch 1, wobei:
das Dämpfungselement (41) und der Positionierungsring (42) der Dämpfungseinheit einstückig ausgebildet sind;
das Dämpfungselement (41) ein oberes Ende hat, das mit einem Schubbereich (411a) versehen ist;
der Positionierungsring (42) eine konische Gestalt hat und sich von einem Boden des Dämpfungselements (41) nach außen erstreckt;
das Dämpfungselement (41) und der Positionierungsring (42) eine Verbindung haben, die mit einer Mehrzahl von elastischen Platten (423a) gebildet ist; und
die Dämpfungseinheit (4) ferner ein elastisches Element (43) aufweist, das im zweiten Aufnahmeabschnitt (34) des Gehäuses (3) angebracht ist, und zwischen einem Boden des zweiten Aufnahmeabschnitts (34) und dem Dämpfungselement (41) vorgespannt ist.

4. Wasserreinigungsvorrichtung nach Anspruch 1, wobei der Halteabschnitt (342) des Gehäuses (3) eine Nut ist, die ein Einführen des Positionierungsrings (42) ermöglicht.

5. Wasserreinigungsvorrichtung nach Anspruch 4, wobei wobei der Halteabschnitt des Gehäuses (3) eine Mehrzahl von konischen Rippen aufweist, die in Längsrichtung und ringförmig angeordnet sind.

6. Wasserreinigungsvorrichtung nach Anspruch 1, wobei:
jeder vom ersten Verbindungsabschnitt des Gehäuses (3) und vom zweiten Verbindungsabschnitt (504) der Kappeneinheit (5) ein diskontinuierliches Doppelgewinde (X) hat; und
wenn der zweite Verbindungsabschnitt (34) der Kappeneinheit (5) auf den ersten Verbindungsabschnitt des Gehäuses (3) geschraubt ist, dass Doppelgewinde in einem Linien-Linien-Kontakt gehalten wird, so dass der erste Verbindungsabschnitt (32) des Gehäuses (3) und
der zweite Verbindungsabschnitt (504) des Kappeneinheit (5) gleichförmig einer Kraft unterworfen werden, um die Schraubkraft zu verbessern und zu verhindern, dass das Doppelgewinde gelöst wird.

7. Wasserreinigungsvorrichtung nach Anspruch 6, wobei, wobei das Doppelgewinde einen Grundbereich hat, der verformt wird.

8. Wasserreinigungsvorrichtung nach Anspruch 1, wobei die Kappeneinheit eine Abdeckung (50), die mit der Wassereinlassöffnung (501) und der Wasserauslassöffnung (502) ausgestattet ist, zwei Schnellkupplungen (51), die mit der Wassereinlassöffnung und der Wasserauslassöffnung der Abdeckung verbunden sind, und zwei Schnallen (52) umfasst, welche die zwei Schnellkupplungen mit der Abdeckung verbinden, und wobei die zwei Schnellkupplungen (51) mit den beiden Schnallen (52) an der Abdeckung befestigt sind und von der Abdeckung gelöst werden.

9. Wasserreinigungsvorrichtung nach Anspruch 1, wobei der zweite Aufnahmeabschnitt (34) sich nach unten in den Boden des Gehäuses (3) erstreckt, um einen Raum für die Aufnahme der Dämpfungseinheit (4) vorzusehen.

10. Wasserreinigungsvorrichtung nach Anspruch 1, wobei der erste Verbindungsabschnitt (32) des Gehäuses (3) ein Außengewinde ist, und der zweite Verbindungsabschnitt (502) der Kappeneinheit (5) ein Innengewinde ist, das auf den ersten Verbindungsabschnitt (32) des Gehäuses (3) geschraubt ist.

## Revendications

1. Structure de purificateur d'eau comprenant :
un ensemble conteneur (7); et
une unité tampon (4) montée dans l'ensemble conteneur (7);
où:
l'ensemble conteneur (7)
comprend un logement (3) et une unité de capuchon (5)
montée sur le logement (3);
le logement (3) a une première portion de connexion (32) ;
le logement (3) a un intérieur pourvu d'une première section de réception (30) ;
un élément filtrant (A) est monté dans la première section de réception (30) du logement (3) ;
le logement (3) a une partie supérieure pourvue d'une ouverture (31) ;
le logement (3) a une partie inférieure pourvue d'une deuxième section de réception (34) connectée à la première section de réception (30) ;
la partie inférieure du logement (3) a une forme rentrante arquée ;
la deuxième section de réception (34) du logement (3) est pourvue d'une portion de retenue (342) ;
l'unité de capuchon (5) a une deuxième portion de connexion (504) connectée de manière amovible à la première portion de connexion (32) du logement (3) ; l'unité de capuchon (5) a un orifice d'entrée d'eau (501) connecté à la première section de réception (30) et un orifice de sortie d'eau (502) connecté à la première section de réception (30) ;
l'unité tampon (4) est montée dans la deuxième section de réception (34) du logement (3) ;
l'unité tampon (4) comprend une bague de positionnement (42) fixée dans la portion de retenue (342) du logement (3), et une pièce d'amortissement (41) montée élastiquement dans la bague de positionnement (42) ;
l'élément filtrant (A) est situé entre l'unité de capuchon (5) et l'unité tampon (4) ,
l'élément filtrant (A) a une partie inférieure pressant la pièce d'amortissement (41) de l'unité tampon (4) ;
la pièce d'amortissement (41) est mobile élastiquement dans la bague de positionnement (42) vers le haut et vers le bas ;
quand la pièce d'amortissement (41) est comprimée par une force externe, la pièce d'amortissement (41) est contractée et déformée élastiquement vers la deuxième section de réception (34) du logement (3), pour former une force tampon ;
la pièce d'amortissement (41) et la bague de positionnement (42) de l'unité tampon (4) sont connectées de manière amovible ;
la pièce d'amortissement (41) a une extrémité supérieure pourvue d'une portion de poussée (411) et une extrémité inférieure pourvue d'une portion de pression (412) ;
la partie inférieure de l'élément filtrant (A) presse la portion de poussée (411) de la pièce d'amortissement (41) ;
la portion de poussée de la pièce d'amortissement (41) est pourvue d'une cavité centrale ayant une forme annulaire ;
la portion de pression de la pièce d'amortissement (41) a une forme conique ;
la bague de positionnement a un intérieur pourvu d'un passage creux (421) ;
la bague de positionnement a une face intérieure annulaire pourvue d'une pluralité de plaques élastiques (423) et a une face extérieure pourvue d'une portion d'encliquetage (422) fixée sur la portion de retenue du logement (3) ;
la portion de pression de la pièce d'amortissement (41) est reçue dans le passage creux de la bague de positionnement (42) et est pressée élastiquement par les plaques élastiques (423) de la bague de positionnement (42) et
la portion de poussée de la pièce d'amortissement (41) fait saillie vers l'extérieur à partir d'une partie supérieure de la bague de positionnement (42).

2. Structure de purificateur d'eau selon la revendication 1, où l'unité de capuchon (5) comprend une chambre (506b), laquelle chambre (5) pourvue d'une troisième section de réception (507b) connectée à la première section de réception (30b), la troisième section de réception de l'unité de capuchon (5b) est pourvue d'une partie de retenue (508b), et l'unité tampon (4b) est insérée dans la troisième section de réception de l'unité de capuchon (5).

3. Structure de purificateur d'eau selon la revendication 1, où :
la pièce d'amortissement (41) et la bague de positionnement (42) de l'unité tampon sont formées de façon intégrante ;
la pièce d'amortissement (41) a une extrémité supérieure pourvue d'une portion de poussée (411a) ;
la bague de positionnement (42) a une forme conique et s'étend vers l'extérieur à partir d'une partie inférieure de la pièce d'amortissement (41) ;
la pièce d'amortissement (41) et la bague de positionnement (42) ont une connexion formée avec une pluralité de plaques élastiques (423a) ; et
l'unité tampon (4) comprend en outre un élément élastique (43) monté dans la deuxième section de réception (34) du logement (3) et biaisé entre une partie inférieure de la deuxième section de réception (34) et la pièce d'amortissement (41).

4. Structure de purificateur d'eau selon la revendication 1, où la portion de retenue (342) du logement (3) est une rainure permettant l'insertion de la bague de positionnement (42).

5. Structure de purificateur d'eau selon la revendication 4, où la portion de retenue du logement (3) comprend une pluralité de nervures coniques arrangées de façon longitudinale et annulaire.

6. Structure de purificateur d'eau selon la revendication 1, où :
chacune de la première portion de connexion du logement (3) et de la deuxième portion de connexion (504) de l'unité de capuchon (5) a un double filetage discontinu (X) ; et
quand la deuxième portion de connexion (34) de l'unité de capuchon (5) est vissée sur la première portion de connexion du logement (3), le double filetage est maintenu en contact ligne à ligne, de sorte que la première portion de connexion (32) du logement (3) et la deuxième portion de connexion (504) de l'unité de capuchon (5) sont soumises à une force de manière uniforme,
pour améliorer une force de vissage et pour empêcher le desserrage du double filetage.

7. Structure de purificateur d'eau selon la revendication 6, où le double filetage a une portion de racine qui est déformée.

8. Structure de purificateur d'eau selon la revendication 1, où l'unité de capuchon comprend un couvercle (50) pourvu de l'orifice d'entrée d'eau (501) et de l'orifice de sortie d'eau (502), deux connecteurs rapides (51) connectés à l'orifice d'entrée d'eau et à l'orifice de sortie d'eau du couvercle, et deux boucles (52) connectant les deux connecteurs rapides au couvercle, et les deux connecteurs rapides (51) sont verrouillés sur le couvercle et déverrouillés de celui-ci par les deux boucles (52).

9. Structure de purificateur d'eau selon la revendication 1, où la deuxième section de réception (34) s'étend vers le bas dans la partie inférieure du logement (3) pour fournir un espace pour recevoir l'unité tampon (4).

10. Structure de purificateur d'eau selon la revendication 1, où la première portion de connexion (32) du logement (3) est un filetage externe, et la deuxième portion de connexion (502) de l'unité de capuchon (5) est un filetage interne vissé sur la première portion de connexion (32) du logement (3).
